# EUROPEAN PATENT APPLICATION

(11) **EP 1 035 490 A1**
(43) Date of publication of application: **13.09.2000**
(21) Application number: 99650023.7
(22) Date of filing: 12.03.1999
(51) Int. Cl.: G06F 17/60

(54) **A survey system and control method**

(71) Applicant: Graphite HRM Developments Limited, Dublin 2 (IE)
(72) Inventor: MacRory, Simon, Monkstown, County Dublin (IE)
(74) Representative: Weldon, Michael James

(57) **Abstract**

A survey system comprises a supervisor station (1) and a respondent station (3). There are four distinct stages in which a survey is created (12), issued (14), executed on the respondent station (3), imported (15), and analysed (17). Questions relate to scales providing for quantitative responses and control programs are issued. The respondent's station exports the survey only when completed, and the respondent station takes an active role in controlling the manner in which responses are received and recorded and it also performs dynamic tests on the data. The questions are in a structured model format and this allows meaningful and clear survey results to be outputted from the analysis stage (17).

## Description

### INTRODUCTION

### Field of the Invention

The invention relates to a computerised survey system and control method, in which the survey system comprises a supervisor station which generates a survey and subsequently analyses the response and a respondent station which receives respondent replies.

### Prior Art Discussions

Such a system is described in United States Patent Specification no. US5842195 (Dolphin Software Pty. Ltd.). In this system the supervisor station is used as an authoring tool to generate a succession of questions to provide a questionnaire. The links between questions are generated as they are authored, and tie questions may have several different formats. The questionnaire is transmitted as an electronic mail document to each respondent, who uses his or her computer as a respondent station. A collector in the supervisor station collates responses as they are received and sends reminders if delays arise. The survey is deactivated by the supervisor when it is believed that sufficient responses have been received.

This system and method appears to allow transmission of questionnaires to a wide variety of respondents. However, it appears that it would be difficult to guarantee integrity of the responses. It also appears that it would be difficult and time-consuming to generate useful survey results for a large body of respondents such as employees in a large organisation.

### Objects of the Invention

The invention is directed towards providing a survey system and control method which provide improved co-ordination for large bodies of respondents such as employees in a large organisation.

Another object is to provide improved flexibility in the analysis of survey responses to generate survey results as require by a supervisor.

A still further object is to provide a survey system which gathers and processes data in a very comprehensive manner, sufficient to act as an organisational diagnosis profiler (ODP) which models behaviour and attitudes of personnel in a large organisation.

### SUMMARY OF THE INVENTION

According to the invention, there is provide a method of controlling a computerised survey system comprising a supervisor station and at least one respondent station, the method comprising the steps of:-
at the supervisor station generating a plurality of questions, and transmitting the questions to the respondent station,
at the respondent station outputting the questions, receiving responses, and transmitting the responses to the supervisor station, and
at the supervisor station analysing the responses and generating survey results, characterised in that
the questions are generated in groups of questions according to a model having a fixed structure, and a response scale comprising an interface for prompting respondent selection of a quantitative value on the scale is generated for each question,
the supervisor station issues a survey to the respondent station, the survey comprising the questions and associated scales and a control program,
the respondent station controls survey operation and generates respondent data files, and returns a complete survey only when all associated respondents have responded;
the complete survey is imported into the supervisor station, and
the supervisor station analyses the responses by calculating a statistical value for all valid responses to each question and outputs said value in the survey results.

The invention therefore provides for highly controlled capture of survey responses because the questions are generated in a pattern according to the model having a fixed structure, they each have a response scale, and the supervisor station issues a complete survey comprising both control programs and the questions and response scale. Another important aspect is that the respondent station performs an active role in ensuring that the survey has been completed before it is exported back to the supervisor station. For analysis, the supervisor station uses the response scales in order to generate comprehensive, meaningful and valuable survey results.

In one embodiment, the fixed structure is a hierarchy with questions grouped at terminations.

Preferably, the survey results are outputted in reports according to the model.

In another embodiment, the scale comprises discrete response values.

Preferably, the scale does not include a median value.

In another embodiment, the survey responses are stored by the supervisor station in a static database, and the analysis is performed dynamically using data read from the static database in a plurality of cycles initiated by a supervisor.

In a further embodiment, the survey response data is filtered as it is imported to the supervisor station.

In another embodiment, the respondent station automatically, and transparently to the respondent, captures auxiliary data relating to the nature of the respondent's use of the respondent station.

Preferably, the respondent station automatically captures reply times.

In a further embodiment, the respondent station automatically captures data relating to the respondent use of a help facility.

In another embodiment, the respondent station automatically generates response validity data according to the paradox tests.

Preferably, the questions include respondent profile questions, and associated response interfaces for recording quantitative response values, and the analysis step sorts survey results according to selected profiles.

In another embodiment, the issued survey data is in flat file format and is retained in that format by the respondent station.

Preferably, the respondent station performs completion rate control by automatically monitoring the number of user data files created.

In a further embodiment, the survey is issued in folders having dedicated read/write access rights to provide security.

### DETAILED DESCRIPTION OF THE INVENTION

### Brief Descriptions of the Drawings

The invention will be more clearly understood from the following description of some embodiments thereof, given by way of example only with reference to the accompanying drawings in which:-
Fig. 1(a) is a diagram illustrating the architecture of a survey system of the invention, and Fig. 1(b) is a diagram illustrating the major components of the survey system in flow diagram form;
Fig. 2 is a diagram illustrating a structure providing a pattern for generating questions;
Fig. 3 is a flow diagram illustrating creation of a survey;
Fig. 4 is a flow diagram illustrating issuance of a survey;
Fig. 5(a) is a flow diagram illustrating execution of a survey a response station, and Fig. 5(b) is a diagram of a user data file which is generated;
Fig. 6(a) is a flow diagram illustrating a message for importing a completed survey into the supervisor station, and Fig. 6(b) and Fig. 6(c) are diagrams illustrating the structure of data files which are created;
Fig. 7 is a flow diagram showing an analysis stage for generation of survey results,
Fig. 8 is a sample display of profiles, and
Figs. 9 to 12 are sample display screens showing supervisor interactivity for analysis.

### Description of the Embodiments

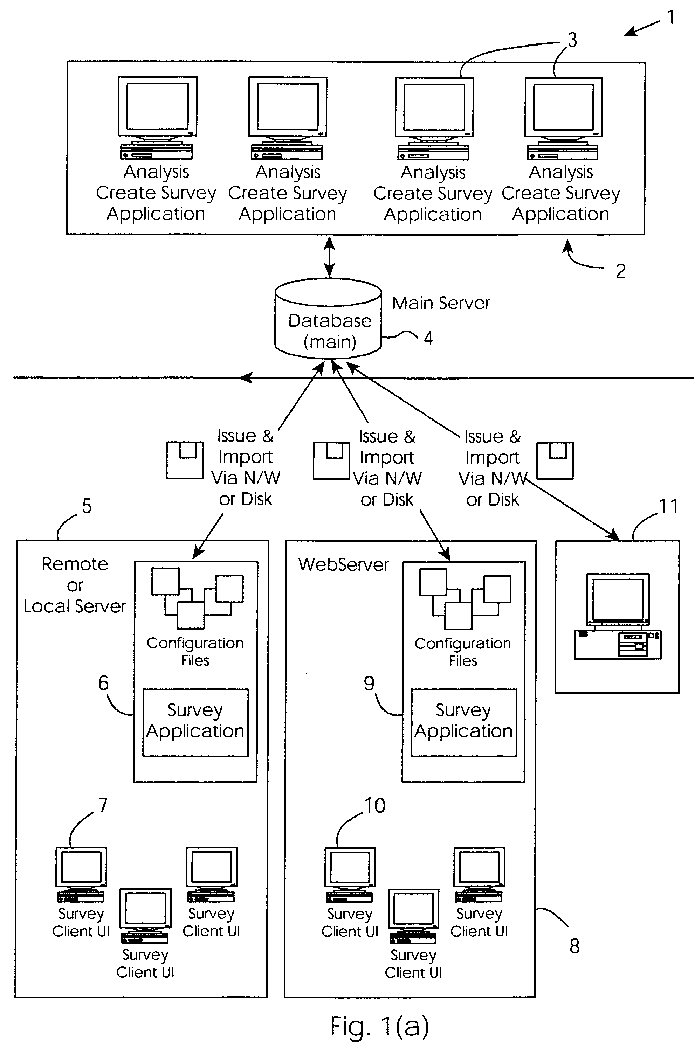

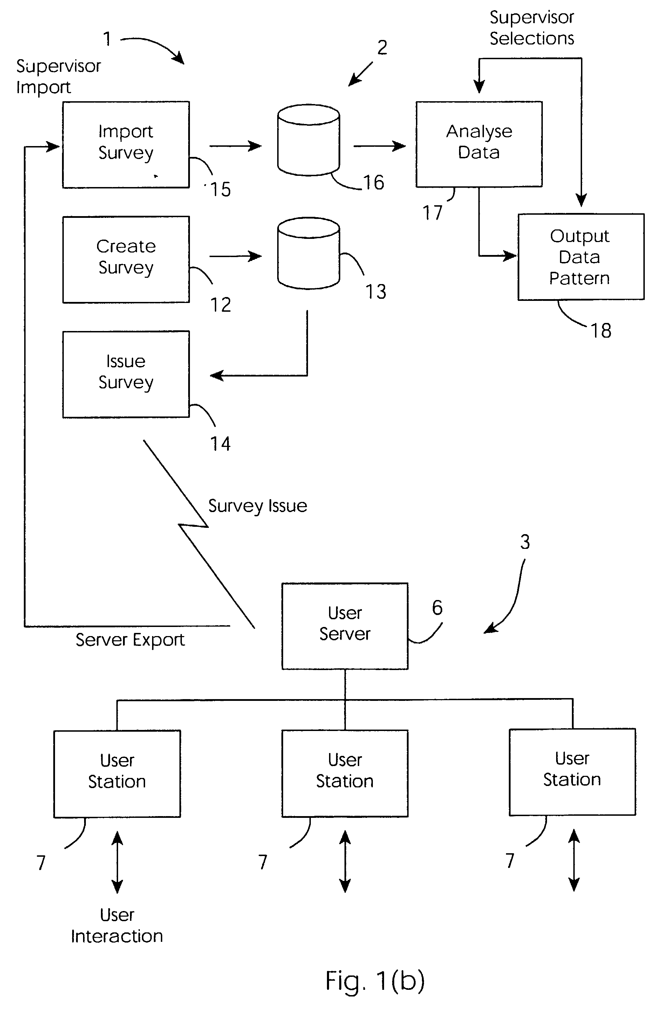

Referring initially for Fig. 1(a), a survey system 1 is illustrated generally with alternatives for parts of the system shown. A supervisor station 2 comprises a number of workstations 3 connected via a network to a main database server 4. The supervisor station 2 issues a survey to respondent stations which may comprise a client/server system 5 which may be either local or remote. The respondent station controls operation of the survey and more particularly a server 6 controls using client workstations 7. A survey may also be issued to a Web server respondent station 8, in which a server 9 executes the survey application using workstations 10 of the respondents. Such a respondent station is implemented with Java and HTML code providing dynamic Web pages. Finally, a survey may be issued to a stand-alone PC respondent station 11.

In all cases, the respondent station executes the survey, actively monitors completion by respondents, closes the survey, and it is then imported into the supervisor station 2.

The major stages in a survey control method implemented by the system 1 are shown in Fig. 1(b). A survey is created by a module 12 and is stored in a database 13. Creation of the survey is according to a pattern set by a model having a fixed hierarchical structure. A module 14 issues the survey. An important aspect of this step is that it is not just questions which are transmitted, but also non-configurable associated response scales which provide for quantitative user responses. Another important aspect is that a control program is issued together with the questions so that if a full survey is issued, allowing the respondent station to take an active role in controlling the manner in which responses are given by a respondent and in providing a completed survey for subsequent import. All data at the respondent station site is in flat file format, independent of database technology

The respondent station only returns the responses when it closes the survey and it is then imported into the supervisor station 2 by a module 15. The importing step involves filtering the response and generating a static database 16. This database is static in the sense that the imported and filtered survey data does not change and is effectively locked. However, other data which is reloaded may change to some extent. Data is drawn from the static database 16 by an analysis module 17 to generate output data patterns 18 according to supervisor instructions.

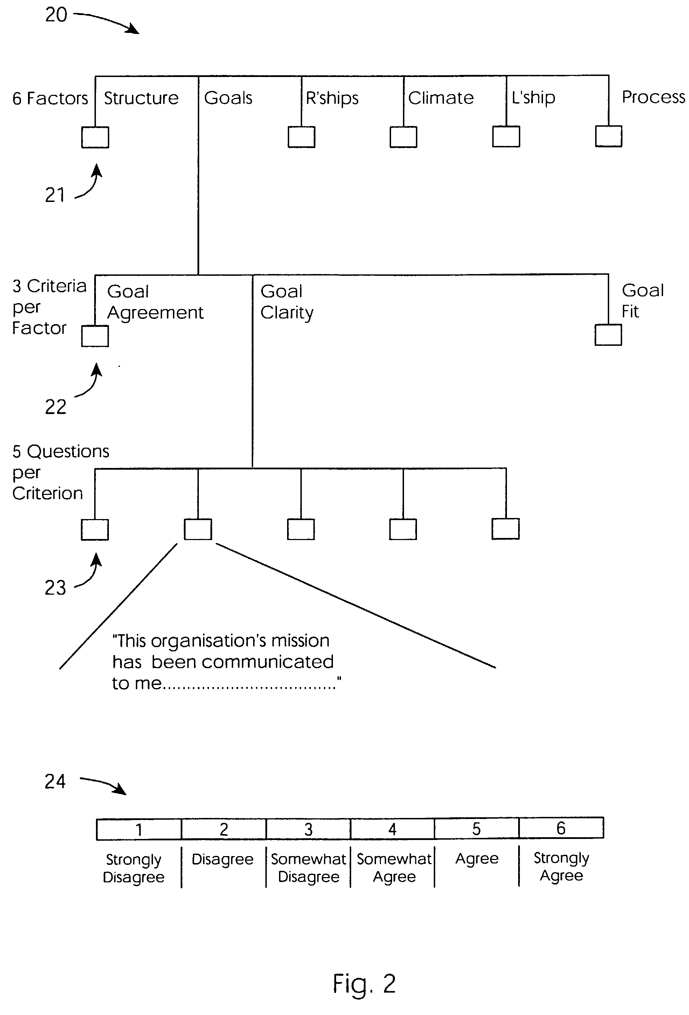

Referring now to Fig. 2, the model for generating questions is indicated by the numeral 20. In this structure, there are six factors which in this embodiment relate to human resource management and the factors are Structure, Goals, Relationships, Climate, Leadership, and Process. Within each of the factors there are three criteria. In this embodiment, the Goal factor has Goal Agreement, Goal Clarity and Goal Fit criteria. Finally, each criterion has five questions. The factor level is indicated by the numeral 21, the criteria level by the numeral 22, and the correction level by the numeral 23. An example question is given in Fig. 2 and a response scale 24 is also illustrated. As is clear from Fig. 2, the response scale has six discrete quantitative values 1 to 6. To respond to a question, the respondent simply selects one of these values. Another important aspect is the fact that there is no median, thus forcing respondents to think more thoroughly about responses. In this embodiment, the scale 24 applies to all of the ninety questions across all of the criteria.

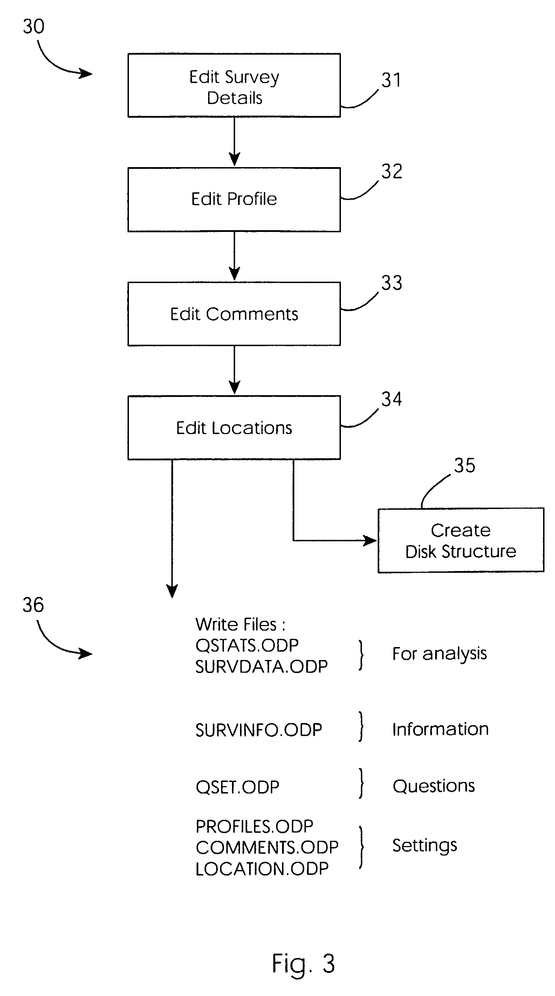

Referring now to Fig. 3, a stage 30 of creating a survey is illustrated. In step 31 various survey details are edited such as the name of the survey, the date etc. In step 32 profiles are edited. The profiles are questions and are associated response displays to receive information regarding the profile of the respondent. These questions are intended to gather information such as the gender, age, education level, current employment position, position level, time with organisation, and work area information. In step 33, comments are edited. These are to allow a respondent make additional comments in addition to responding to the questions in the model. Further settings are provided in step 34 in which the supervisor edits the locations at which responses are to be gathered. Typically a location is a respondent station. In a large organisation this would typically be a respondent workstation or a server which caters for a number of respondents each using his or her workstation 16. In step 35 the supervisor station creates the static database 16 for subsequently receiving filtered response data. Various files are written in step 36, including QSTAT.ODP and SURVDATA.ODP, both of which are subsequently used for the static database 16. A file SURVINFO.ODP is also generated from subsequently received information regarding the survey. A file QSET.ODP contains the questions which have been generated, and files PROFILES.ODP, COMMENTS.ODP, and LOCATION.ODP contain survey settings.

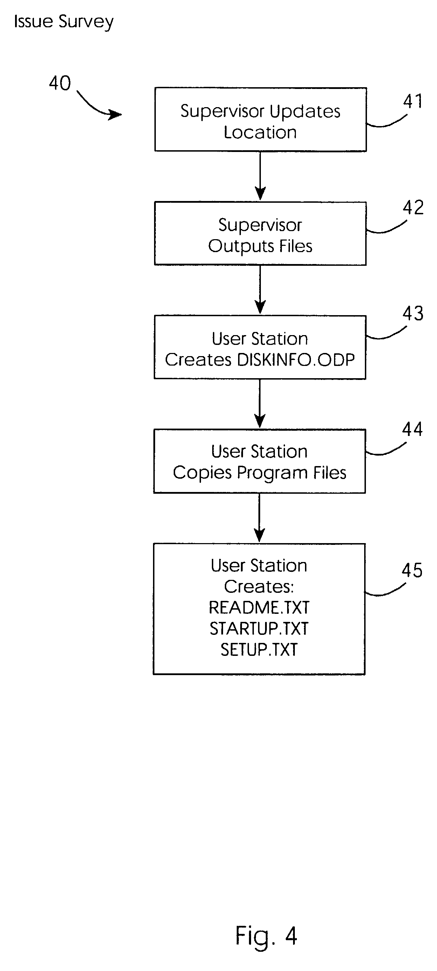

Referring now to Fig. 4, a stage 40 of issuance of the survey is described. In step 41 the respondent locations are updated the files created in the stage 30 are outputted. In particular, the following files are outputted:-
QSET.ODP
PROFILES.ODP
COMMENTS.ODP
LOCATION.ODP

In step 43 the respondent station creates a file called DISKINFO.ODP. This is a control file which indicates the status of the survey and once it is created, the survey may be executed on the respondent station. The program files are copied in step 44 and in step 45 the respondent station creates read me README.TXT, STARTUP.TXT, and SETUP.TXT.

For security purposes, the survey is issued as there main folders. A main application file folder has read and execute access rights only. A folder for incomplete user data files has read, write, and delete access rights. Finally, a folder for complete user data files has read and write access rights only. This ensures that completed survey files cannot be deleted. This is important when the survey is issued to a public access server, which is exposed to possible mis-use and accidental file deletion.

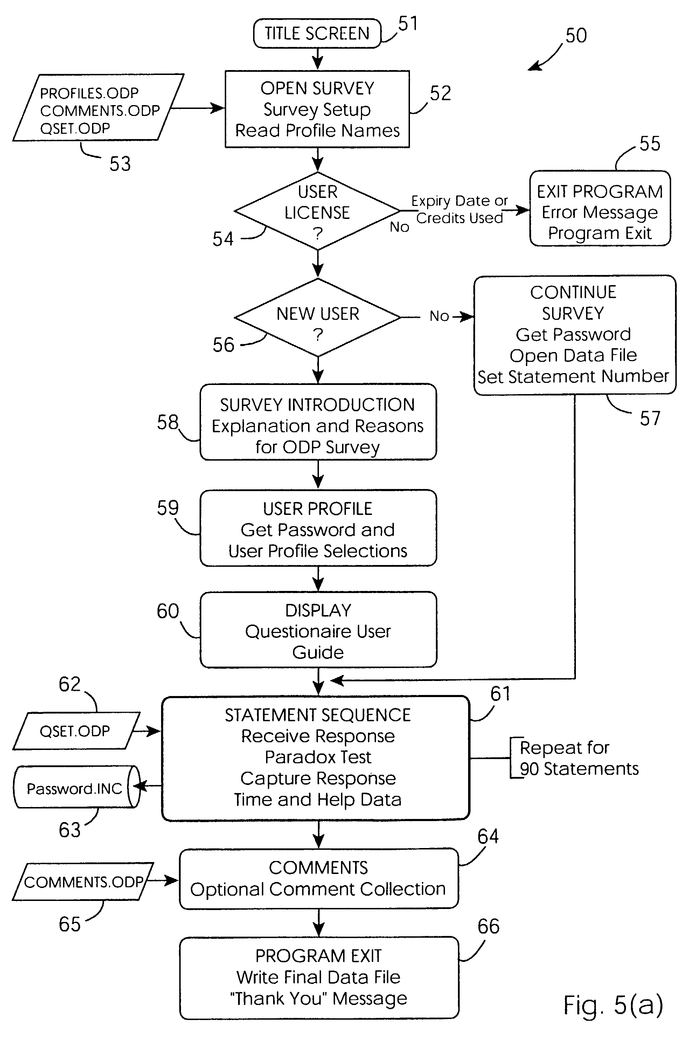

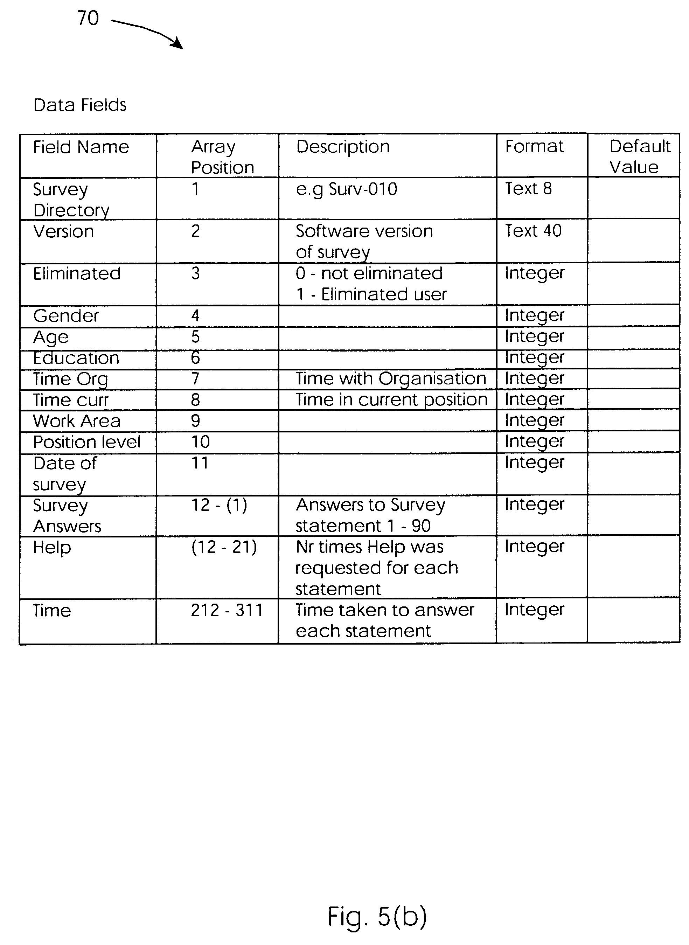

Referring now to Fig. 5(a), execution of the survey on the respondent station is now described.

A title screen displayed in step 51 allows a survey to be opened in step 52. The respondent station uses the program file to set up the survey and it reads the profile names. As shown by the step 53, the files used are PROFILE.ODP, COMMENTS.ODP, and QSET.ODP. In steps 54 and 55, user licence data is checked and the program exits if not available. In step 56, the station determines if the user is new and if not, in step 57 it continues with the survey by controlling access using a password, writing a new user data file, and setting a statement number. The user data file is described in more detail below.

In step 58, the station displays a survey introduction and in step 59 it displays questions to prompt input of user profile information and in step 60 it displays a questionnaire guide.

The sequence for each of the ninety questions or statements is illustrated in step 61. The station fetches the statement from QSET.ODP in step 62, subsequently receives a response and automatically on-the-fly carries out a paradox test. The paradox test arises from the structure of the statement pattern in that for each criteria there is a number of statements and the control program in the issued survey recognises paradox's in answers given to related questions. Suspect responses are flagged as such.

In addition, the respondent station automatically records the time taken for the response to be given according to a real time clock. Finally, the respondent station also automatically captures data relating to usage of house facilities by the respondent.

Comments as prompted by the COMMENTS.ODP file 65 are captured in step 64. The program exits in step 66 with a final display message.

Because responses are dynamically processed and saved, problems do not arise if the system crashes or is accidentally switched off.

Referring now to Fig. 5(b), the user data file which is generated by the respondent station is illustrated. As is clear from this diagram, the user data file contains some general information such as the survey directory and version. It also data indicating users respondents which are eliminated. Profile data is included such as the respondent's gender, age, education, time in organisation, time in the current position, work area, and position level.. The survey answers are given in an array of single value for each response, the value being that selected on the scale 24. The last two rows provide data on the number of times help was requested from each statement and the time taken to answer.

An important aspect of the operation of the respondent station is that it performs completion rate control according to the program files received in the survey. This involves plotting completion rates by monitoring completion of data files. Also, it sorts according to department of the user (respondent) so that managers may ensure completion according to deadlines. This is another important example of the active manner in which the respondent station operates.

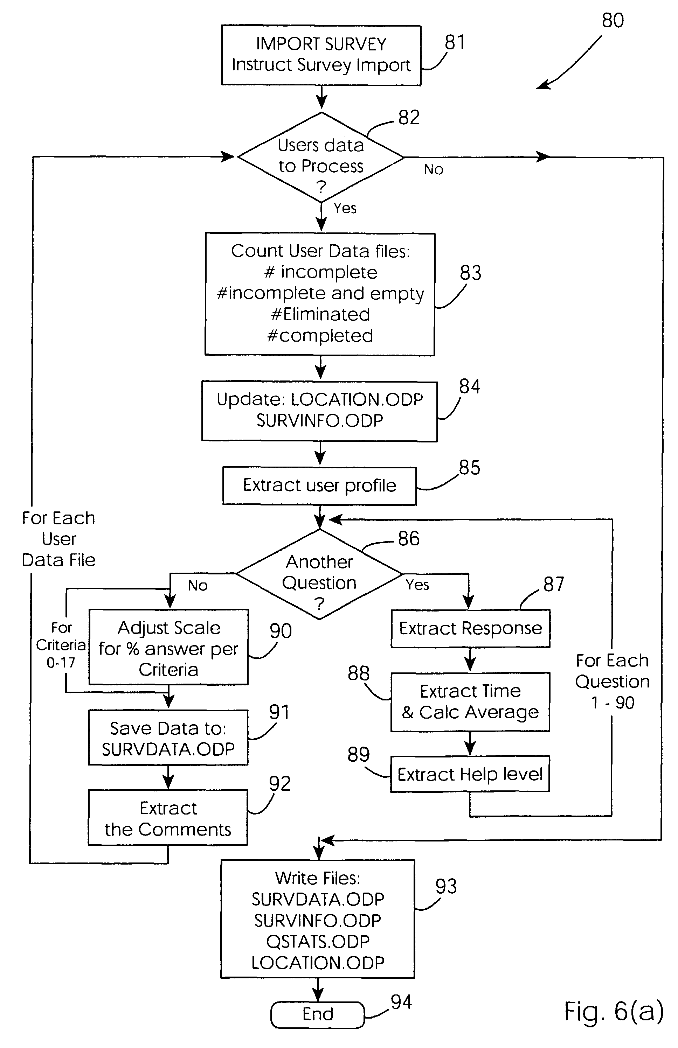

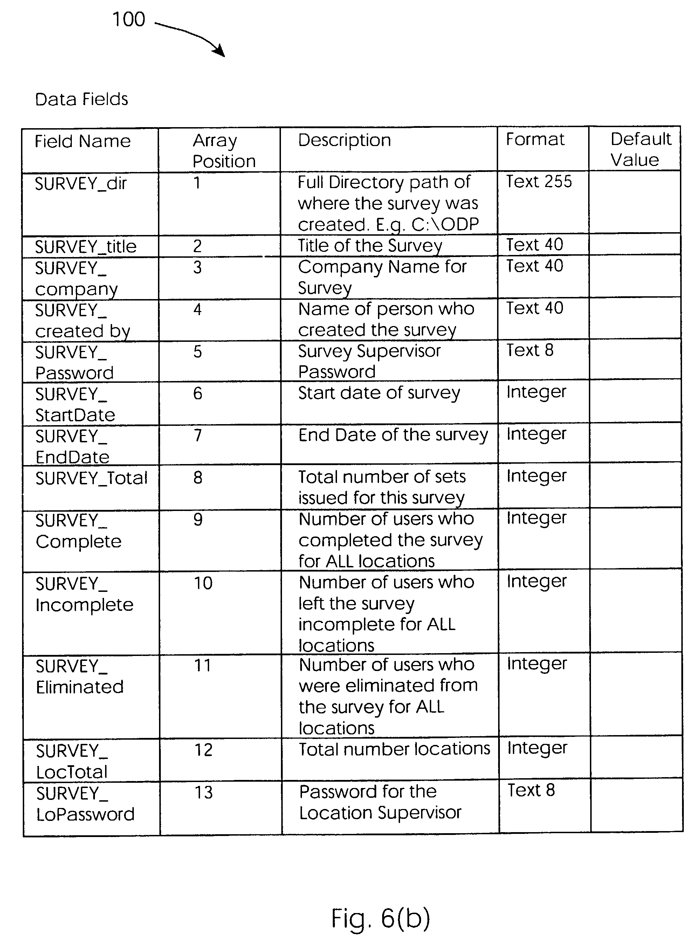

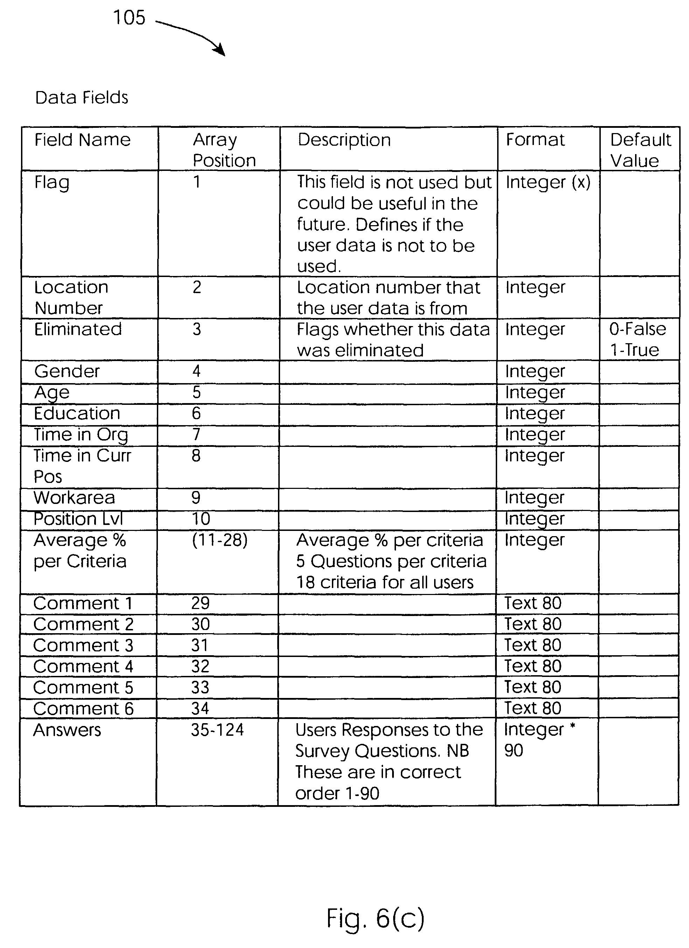

Referring now to Fig. 6(a), a stage 80 of importing the survey to the supervisor station is illustrated. The stage is instructed in step 81 and a decision step 82 indicates if there is data to process. In step 83 the supervisor station counts the user data files and records the numbers which are complete, incomplete and empty, and eliminated. This is part of a filtering process. These filtering operations are used to update the files LOCATION.ODP and SURVINFO.ODP in step 84. In step 85 the supervisor station extracts the user profile data for the respondent. A decision step 86 indicates if the questions for each response have all been processed. For each respondent the response is extracted in step 87, the time is extracted in step 88 and at the average calculated. The help level is extracted at step 89. In steps 87, 88, and 89 are repeated at each statement. When all statements have been processed means are calculated on a per criteria basis in step 90 and the data is saved to the SURVDATA.ODP file in step 91. The comments are extracted in step 92. The program sequence then goes back to step 82 for the next respondent. When the responses for all respondents has been processed the supervisor station writes the processed data to the files SURVDATA.ODP, SURVINFO.ODP, QSTAT.ODP, and LOCATION.ODP. The importing stage ends in step 94.

Referring to Fig. 6(b), a SURVINFO.ODP file 100 is described. As is clear from this diagram, this file records information of a general nature relating to the survey. This is of benefit to management. Referring to Fig. 6(c), a SURVDATA.ODP file 105 is illustrated. Again, it will be clear that the data is in quantitative format, namely an integer which indicates the location, eliminated data, the profile data, and the statement responses. Respondent textual comments are also recorded in six Comment rows.

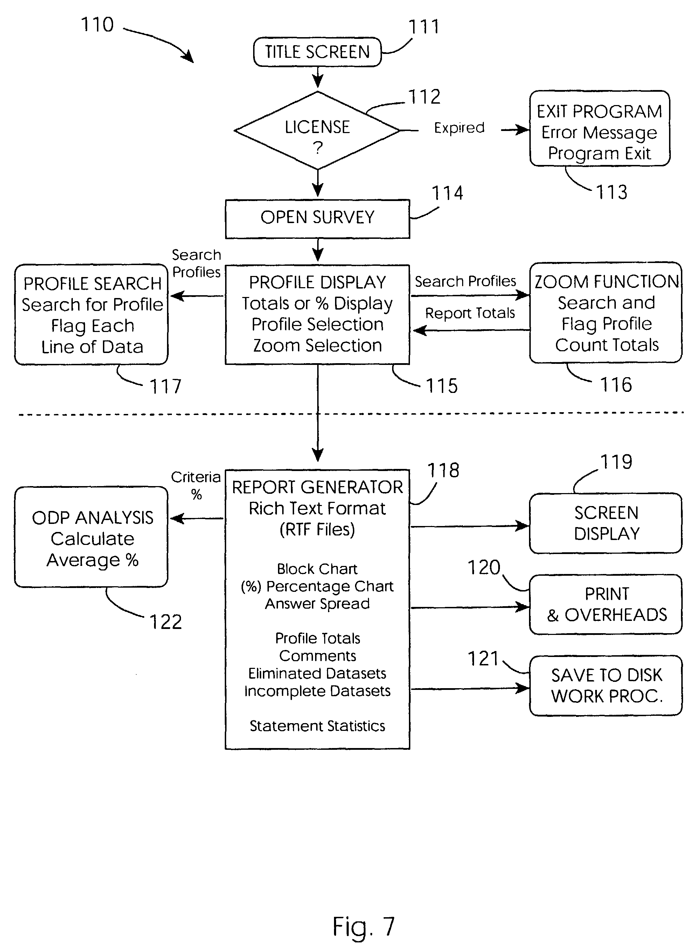

The SURVDATA.ODP file provides a static database of survey responses which have been filtered during the import stage. This data is then used in an analysis stage 110 illustrated in Figs. 7, 8, and 9. Referring initially to Fig. 7, a title screen is displayed in step 111 and in steps 112 and 113 access is controlled according to the supervisor licence. If access is gained, the survey is opened in step 114 and in step 115 a profile display 125 (see Fig. 3) is illustrated. As is clear from this diagram, the values for each of the profile items is given. This information is retrieved from the SURVDATA.ODP file. An important aspect of this display is that it allows a supervisor to select subsets of the responses according to the profiles. In step 116, the analysis module performs a zoom function.

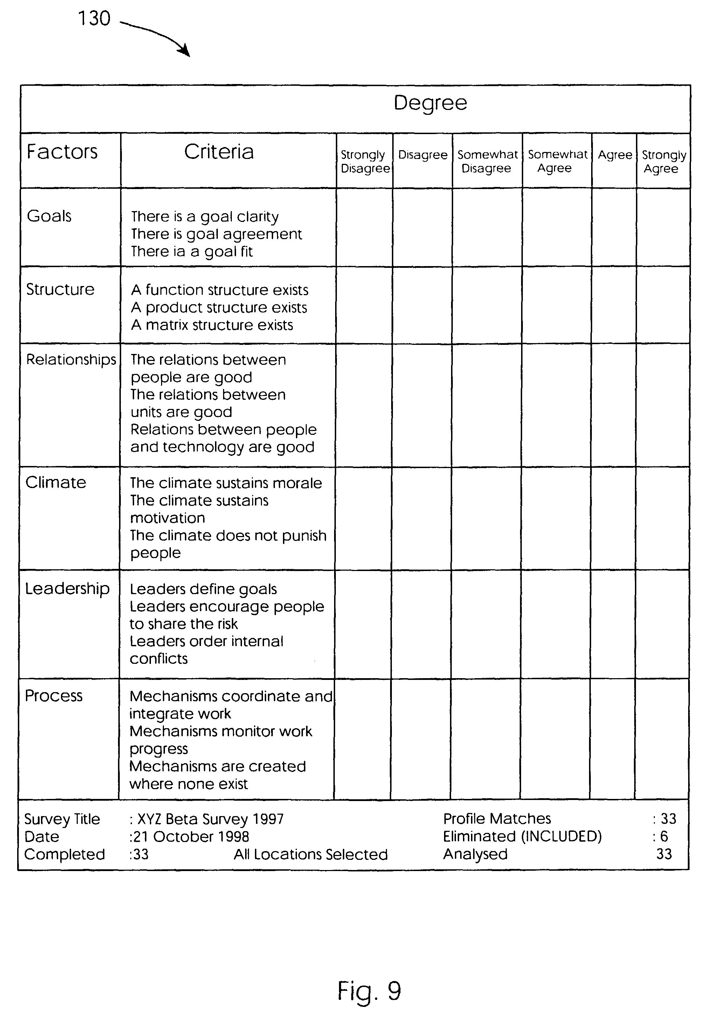

In step 118 reports are generated in various formats. An important aspect of the invention is the fact that the model shown in Fig. 2 provides a structure for generation of data in a meaningful manner. For example, referring to Fig. 9 the responses on the scales are consolidated to give overall results after each criteria. This is very important because it provides information at a glance, which information is meaningful and generated with excellent integrity because of use of the scales and the model. As shown in Fig. 7, the displays are made in step 119, reports are printed in step 120 and are saved to disk in step 121. Average calculation analysis operations are performed in step 122.

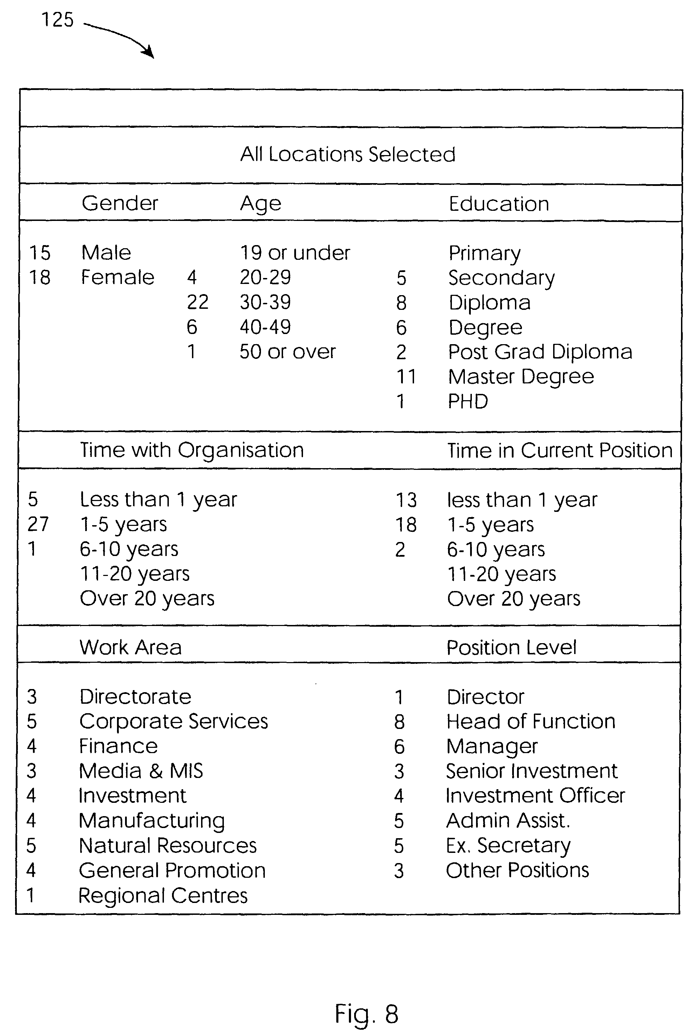

In more detail, a number of different analysis outputs are possible. A display 125 (shown in Fig. 8) allows selection of respondent profiles for analysis. Different analyses are performed and different outputs generated. The outputs include line graphs, spread analysis, statistical analysis, spread profiling, and comparisons.

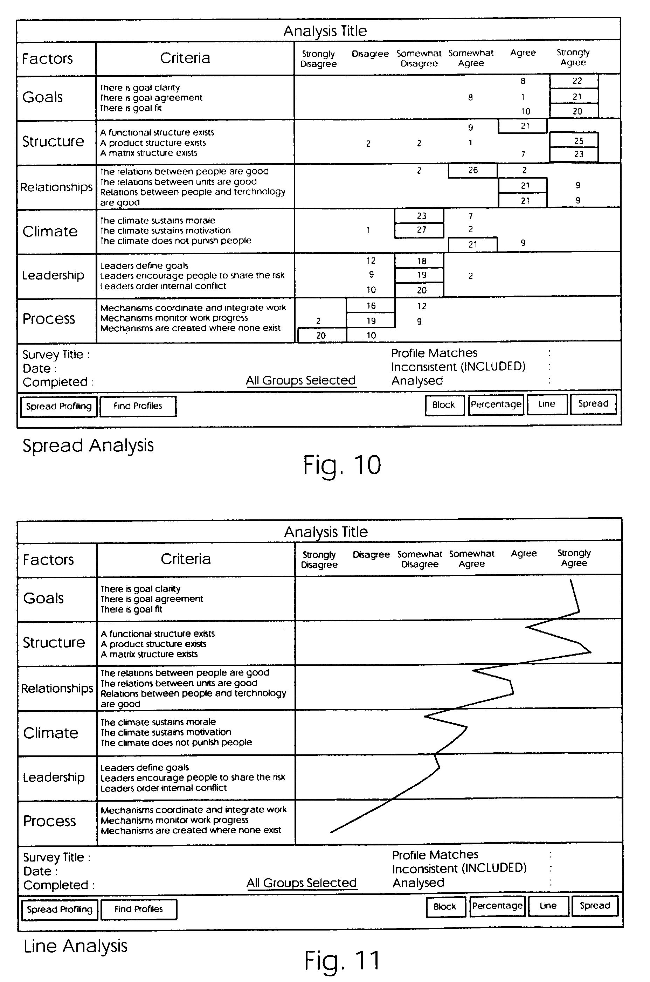

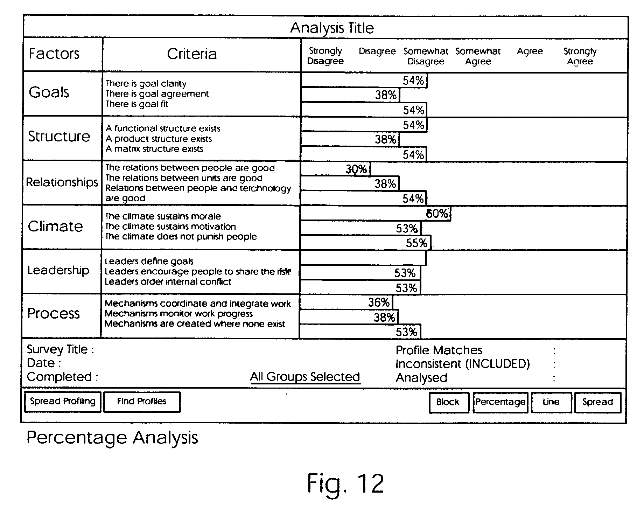

The screen 130 of Fig. 9 is a default analysis screen. The average criteria percentage is displayed here in six different strengths, from Strongly Disagree to Strongly Agree. The percentage values are shown in block format and are colour coded to help ease of viewing. A spread analysis display 135 is shown in Fig. 10, a line analysis display 140 in Fig. 11, and a percentage analysis display 145 in Fig. 12. The analysis module 17 also simultaneously displays multiple reports, one each of a number of different profiles. The default display is block analysis.

The analysis module 17 also uses profile categories which have been selected and inserted into a temporary table analysis file. This process is used for both inclusive and exclusive analysis. The process is as follows:-
//Find all the users that match the selected profile for this survey
//Inclusive Analysis
FOR ALL Users LOOP
IF (User belongs to the category items that are currently selected) AND (Belongs to one of the Group that are currently selected) AND (Belongs to this survey) THEN
• Add these users to the tmp_odp_analysis list
END IF
NEXT
IF Mode = Inclusive THEN
Select all the users from the list who have ALL the categories selected (i.e. not just one of)
Calculate the average percentage value per criteria from each user.

For inclusive analysis the supervisor selects category items to be included in the analysis. For example, if the supervisor selects "Male" and "Managers", the process selects all respondents who are both male and managers. On the other hand, if these options are selected for exclusive analysis, the process selects all respondents who are NOT male OR NOT managers.

A zoom process recalculates the total user count per category for the current analysis profile, in which supervisor selection is on an exclusive basis. The process flow is as follows:-

The process recalculates the category item totals excluding the category items that have been selected for exclusion when in Zoom mode.

Insert new record into the Category_Profile_temp table for the new category item selected (with type Exclusive).

Selected Category Items from analysis profile temp table where the type is Exclusive.
//EXCLUSIVE Analysis
FOR ALL Users LOOP
IF (User does not belong to ANY of the category items in the temp table) AND (Belongs to one of the Org Group that are currently selected) AND (Belongs to this survey) THEN
• Add this user to the current user list
END IF
END LOOP
FOR ALL the categories LOOP
FOR ALL the CATEGORY ITEMS in THE CATEGORIES
Count the users from the current user list who belong to this category Item
END LOOP
END LOOP

Another process analyses an individual statement and provides a display (such as a piechart) of the proportion for each of the six possible answers.

In a still further process, the module overlays results from a number of different reports and displays the results with in the line graph format of Fig. 11.

It will be appreciated that the invention provides excellent data integrity because of the dynamic tests performed by the responded station and the auxiliary data which is recorded.

The model which terminates with the statements and the fixed response scale allow for comprehensive analysis of results in a meaningful and versatile manner, as described above. Also, the survey issue, execution, and import steps allow excellent control at the respondent side. This control achieves both improved integrity of respondent replies and overall control of timing up to the stage of analysis of all returns. The survey import filtration and static database completion allow a wide variety of analysis reports. It will also be appreciated that the sequence of survey creation, issuance, execution and importing together allow very comprehensive data capture and analysis, sufficient to provide an organisational diagnosis profiler (ODP) which models behaviour and attitudes of personnel in a large organisation.

The invention is not limited to the embodiments described but may be varied in construction and detail within the scope of the claims.

## Claims

1. A method of controlling a computerised survey system comprising a supervisor station and at least one respondent station, the method comprising the steps of:-
at the supervisor station generating a plurality of questions, and transmitting the questions to the respondent station,
at the respondent station outputting the questions, receiving responses, and transmitting the responses to the supervisor station, and
at the supervisor station analysing the responses and generating survey results, characterised in that,
the questions are generated in groups of questions according to a model having a fixed structure, and a response scale comprising an interface for prompting respondent selection of a quantitative value on the scale is generated for each question,
the supervisor station issues a survey to the respondent station, the survey comprising the questions and associated scales and a control program,
the respondent station controls survey operation and generates respondent data files, and returns a complete survey only when all associated respondents have responded;
the complete survey is imported into the supervisor station, and
the supervisor station analyses the responses by calculating a mean value for all valid responses to each question and outputs the mean value in the survey results.

2. A method as claimed in claim 1, wherein the model fixed structure is a hierarchy with questions grouped at terminations.

3. A method as claimed in claim 2, wherein the survey results are outputted in reports according to the model.

4. A method as claimed in any preceding claim, wherein scale comprises discrete response values.

5. A method as claimed in claim 4, wherein the scale does not include a median value.

6. A method as claimed in any preceding claim, wherein the survey responses are stored by the supervisor station in a static database, and the analysis is performed dynamically using data read from the static database in a plurality of cycles initiated by a supervisor.

7. A method as claimed in any preceding claim, wherein the survey response data is filtered as it is imported to the supervisor station.

8. A method as claimed in claims 6 or 7, wherein the analysis step includes searching respondent profile data captured during the survey to create sub-sets of the response data.

9. A method as claimed in any preceding claim, wherein the respondent station automatically, and transparently to the respondent, captures auxiliary data relating to the nature of the respondent's use of the respondent station.

10. A method as claimed in claim 9, wherein the respondent station automatically captures reply times.

11. A method as claimed in claims 9 or 10, wherein respondent station automatically captures data relating to the respondent use of a help facility.

12. A method as claimed in any of claims 9 to 11, wherein the respondent station automatically generates response validity data according to paradox tests.

13. A method as claimed in any preceding claim, wherein the questions include respondent profile questions, and associated response interfaces for recording quantitative response values, and the analysis step sorts survey results according to selected profiles.

14. A method as claimed in any preceding claim, wherein the issued survey data is in flat file format and is retained in that format by the respondent station.

15. A method as claimed in any preceding claim, wherein the respondent station performs completion rate control by automatically monitoring the number of user data files created.

16. A method as claimed in any preceding claim, wherein the survey is issued in folders having dedicated read/write access rights to provide security.
